# EUROPEAN PATENT APPLICATION

(11) **EP 4 793 904 A1**
(43) Date of publication of application: **19.08.2026**
(21) Application number: 26158423.9
(22) Date of filing: 13.02.2026
(51) Int. Cl.: G06V 20/40, G06V 10/778, G06V 10/82, G06V 20/52

(54) **METHODS AND APPARATUSES FOR VIDEO ANALYTICS BASED ON NATURAL LANGUAGE INPUT**

(30) Priority: 13.02.2025 US 202563758245 P; 11.02.2026 US 202619537131
(71) Applicant: Tyco Fire & Security GmbH, 8212 Neuhausen am Rheinfall (CH)
(72) Inventor: BURNS, Vincent Patrick, Belfast (GB); BUCZMA, Amadeusz, Bangor, County Down (GB); MURTAGH, Bryan Robert, Belfast (GB); ARSLAN, A. Tugay, Newtownabbey, Co. Antrim (GB); BARR, Isaac, Belfast (GB)
(74) Representative: Meissner Bolte Nürnberg

(57) **Abstract**

Aspects of the present disclosure include a method, a system, and/or a non-transitory computer readable medium for identifying an event, comprising receiving a plurality of images, receiving a natural language question from a client to identify the event, and generating one or more natural language follow-up questions based on the natural language question. The method, system, and/or non-transitory computer readable medium further comprises providing the one or more natural language follow-up questions to the client, and receiving, in response to the one or more natural language follow-up questions, one or more natural language answers. The method, system, and/or non-transitory computer readable medium further comprises identifying the event from the plurality of images based on at least one of the one or more natural language answers.

## Description

### CROSS-REFERENCE TO RELATED APPLICATIONS

This application claims the benefit of U.S. Provisional Application No. 63/758,245, filed on February 13, 2025 and entitled "METHODS AND APPARATUSES FOR VIDEO ANALYTICS BASED ON NATURAL LANGUAGE INPUT," the contents of which are incorporated by reference herein in the entirety.

### TECHNICAL FIELD

The present disclosure relates generally to video analytics, and more specifically, to video analytics based on natural language input.

### BACKGROUND

Analyzing video may be challenging, resource intensive, and context specific. Current video surveillance systems may lack the ability to adapt to specific situation/requests from security personnel, and rely instead on costly predefined analytics. For example, security personnel may be confined to perform searches that are embedded in the existing surveillance systems (e.g., locating a falling person, detecting a fire, searching for a speeding vehicle, etc.). However, it may be difficult for security personnel to "customize" a request without having predefined analytics that satisfy the criteria associated with the request (e.g., locating a tall person wearing blue shirt and carrying a brown bag). Therefore, improvements are desired.

### SUMMARY

This summary is provided to introduce a selection of concepts in a simplified form that are further described below in the DETAILED DESCRIPTION. This summary is not intended to identify key features of the claimed subject matter, nor is it intended to be used as an aid in determining the scope of the claimed subject matter. Embodiments according to the invention are disclosed in particular in the appended claims.

Aspects of the present disclosure include a system for identifying an event. The system comprises one or more memories storing instructions therein, and one or more processors communicatively coupled with the one or more memories. The one or more processors are configured, individually or in any combination, to execute the instructions to perform the following actions, including to receive a natural language question from a client to identify the event, generate one or more natural language follow-up questions based on the natural language question, provide the one or more natural language follow-up questions to the client, receive, in response to the one or more natural language follow-up questions, one or more natural language answers, and identify the event from the plurality of images based on at least one of the one or more natural language answers.

Aspects of the present disclosure include a non-transitory computer readable medium having instructions stored therein for identifying an event. The instructions, when executed by one or more processors, individually or in any combination, cause the one or more processors to receive a natural language question from a client to identify the event, generate one or more natural language follow-up questions based on the natural language question, provide the one or more natural language follow-up questions to the client, receive, in response to the one or more natural language follow-up questions, one or more natural language answers, and identify the event from the plurality of images based on at least one of the one or more natural language answers.

Aspects of the present disclosure include a method for identifying an event. The method comprises receiving a plurality of images, receiving a natural language question from a client to identify the event, generating one or more natural language follow-up questions based on the natural language question, providing the one or more natural language follow-up questions to the client, receiving, in response to the one or more natural language follow-up questions, one or more natural language answers, and identifying the event from the plurality of images based on at least one of the one or more natural language answers.

### BRIEF DESCRIPTION OF THE DRAWINGS

The features believed to be characteristic of aspects of the disclosure are set forth in the appended claims. In the description that follows, like parts are marked throughout the specification and drawings with the same numerals, respectively. The drawing figures are not necessarily drawn to scale and certain figures may be shown in exaggerated or generalized form in the interest of clarity and conciseness. The disclosure itself, however, as well as a preferred mode of use, further objects and advantages thereof, will be best understood by reference to the following detailed description of illustrative aspects of the disclosure when read in conjunction with the accompanying drawings, wherein:
FIG. 1 is a schematic diagram of an example of an environment for identifying an event based on a natural language question according to aspects of the present disclosure.
FIG. 2 is a block diagram of an example of an analytics component for identifying an event based on a natural language question in accordance with aspects of the present disclosure.
FIG. 3 is a schematic diagram of an example of a neural network for identifying objects in accordance with aspects of the present disclosure.
FIG. 4 is a block diagram of an example of a computer system in accordance with aspects of the present disclosure.
FIG. 5 is a flow chart of an example of a method for identifying an event based on a natural language question according to aspects of the present disclosure.
FIG. 6A is an example user interface displaying a first example video scene of a first stream with an example natural language (NL) rule applied.
FIG. 6B is the example user interface displaying the first video scene with multiple NL rules applied, according to some aspects of the present disclosure.
FIG. 6C is the example user interface displaying a second example video scene of the first stream with the multiple NL rules of FIG. 6B applied, according to some aspects of the present disclosure.
FIG. 6D is the example user interface displaying a third example video scene of a second stream with multiple example NL rules applied, according to some aspects of the present disclosure.
FIG. 6E is the example user interface displaying a fourth example video scene of a third stream with another example NL rule applied, according to some aspects of the present disclosure.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components may be shown in block diagram form in order to avoid obscuring such concepts.

Conventional video surveillance systems have faced significant challenges in efficiently interpreting user requests and adapting to dynamic environments under video surveillance. Existing solutions often require users to interact with rigid, menu-driven interfaces or rely on manual review of video feeds, which can be time-consuming, error-prone, and difficult to scale. Additionally, these conventional systems typically lack the ability to flexibly process complex or ambiguous user queries, resulting in limited responsiveness and reduced utility in real-world scenarios. Furthermore, prior approaches have struggled to effectively leverage video analytics in a manner that is both context-aware and responsive to user intent, often leading to inaccurate or incomplete monitoring outcomes.

The present disclosure includes a video surveillance system that receives natural language input from a user to identify an event, generates one or more follow-up questions based on the input, and, after receiving one or more answers to these questions, identifies the event by utilizing video analytics of images. This approach enables more intuitive and efficient user interaction, allowing the system to clarify ambiguous requests and tailor its analysis to the specific needs of the user, thereby improving the accuracy and relevance of the monitoring results.

In particular, the present disclosure includes features such as an interface for natural language input, a component for generating contextually relevant follow-up questions, and a component that processes images in response to clarified user requests. By integrating these components, the system dynamically adapts its analysis based on real-time user feedback, reducing the need for manual intervention and enabling more precise detection of events, such as fires, people who have fallen, objects such as protective gear (e.g., high-visibility vest, helmet or other protective headgear, etc.). The use of natural language processing allows users to interact with the system in a more natural and flexible manner, while the follow-up question mechanism ensures that the system resolves ambiguities and gather additional information as needed. The video analytics component leverages advanced image processing techniques to accurately interpret visual data, further enhancing the ability of the system to deliver actionable insights. Collectively, these features provide a robust and scalable solution that addresses the limitations of prior systems and supports a wide range of video surveillance applications.

In one example implementation, the present disclosure includes providing an interface for natural language input to perform video analytics. The system receives the natural language input, and generates one or more follow-up questions based on the natural language input. After receiving one or more answers to the one or more follow-up questions, the system performs one or more actions requested in the natural language input by utilizing video analytics of images. For example, such actions include, but are not limited to, identifying a person who has fallen, identifying a fire, and/or identifying an object. This interactive natural language processing, combined with video analytics, enables more intuitive user interaction and precise action execution compared to systems relying on predefined commands or manual data interpretation, thereby improving operational efficiency and reducing user error in complex environments under video surveillance.

In alternative or additional aspects, the present disclosure include methods, systems, and processes for identifying an event, comprising receiving a plurality of images, receiving a natural language question from a client to identify the event, generating one or more natural language follow-up questions based on the natural language question, providing the one or more natural language follow-up questions to the client, receiving, in response to the one or more natural language follow-up questions, one or more natural language answers, and identifying the event from the plurality of images based on the one or more natural language answers. This natural-language interaction conditions subsequent analytics over the images with operator-provided constraints in real time, narrowing the search space and grounding detection to scene context before execution. As a result, the system delivers lower latency and reduced computational load with higher detection accuracy and fewer false positives than prior solutions that depend on fixed, preprogrammed analytics or manual rule scripting to support new queries.

In some alternative or additional aspects, the event is identified from the plurality of images using a neural network. When implemented with a neural network, object identification leverages learned feature representations to robustly detect the event, a location of the event, and/or other information relevant to the event, such features (e.g., appearance, height, built, hair color, ethnicity, etc.) associated with a person, objects (e.g., accessories such as hats and glasses, clothing, and/or jewelry worn by a person), and/or environmental information (e.g., cars driven, potential witnesses, accomplices, etc.), thereby reducing false positives and false negatives relative to rule-based or template-driven detectors. This data-driven approach also reduces per-camera calibration and manual threshold tuning, enabling real-time inference at scale across diverse sites under video surveillance with improved accuracy and lower compute and maintenance overhead compared to prior solutions.

In some alternative or additional aspects, generating the one or more natural language follow-up questions comprises iteratively generating the one or more natural language follow-up questions based on a large-language model (LLM). This approach leverages the advanced natural language understanding and generation capabilities of the LLM to produce highly contextual and nuanced follow-up questions, significantly improving the ability of the system to precisely ascertain operator intent. This reduces the burden of manual rule definition and provides greater adaptability and accuracy compared to static, rule-based question generation systems, enhancing the overall efficiency and effectiveness of the video surveillance process.

In some alternative or additional aspects, one or more context-based questions are retrieved based on a context of the plurality of images. In some aspects, generating the one or more natural language follow-up questions comprises iteratively generating the one or more natural language follow-up questions based on the context of the plurality of images. By conditioning follow-up question generation on scene context (e.g., time of day, venue type, camera location, and observed activity), the system selects prompts that elicit relevant constraints for the images actually being analyzed, thereby reducing ambiguous input and unnecessary dialog turns. Compared to prior solutions that rely on static questionnaires or generic prompts, this context-aware questioning prunes irrelevant hypotheses earlier in the pipeline, improving detection accuracy and response latency while lowering computational load.

In some alternative or additional aspects, a subset of the plurality of images that are associated with the identified event is displayed onto the client. In some alternative or additional aspects, an alarm is triggered in a graphical user interface for display to an operator, in response to the identified event. In some alternative or additional aspects, a control directive is forwarded to a controller at a site that the plurality of images capture to actuate an alarm or warning system at the site, in response to the identified event. By executing such actions within a unified, constraint-aware video analytics pipeline that fuses object detection, scene context, and operator intent, the system produces precise, real-time outputs (e.g., images showing the identified event, triggering alarms/alerts, on-site actuations of alarm or warning systems) without requiring bespoke rule packs for each task. This integrated approach reduces camera-by-camera manual review and model switching, lowers latency and compute overhead, and improves accuracy relative to prior solutions that depend on static spot sensors, siloed detectors, or post-hoc human triage.

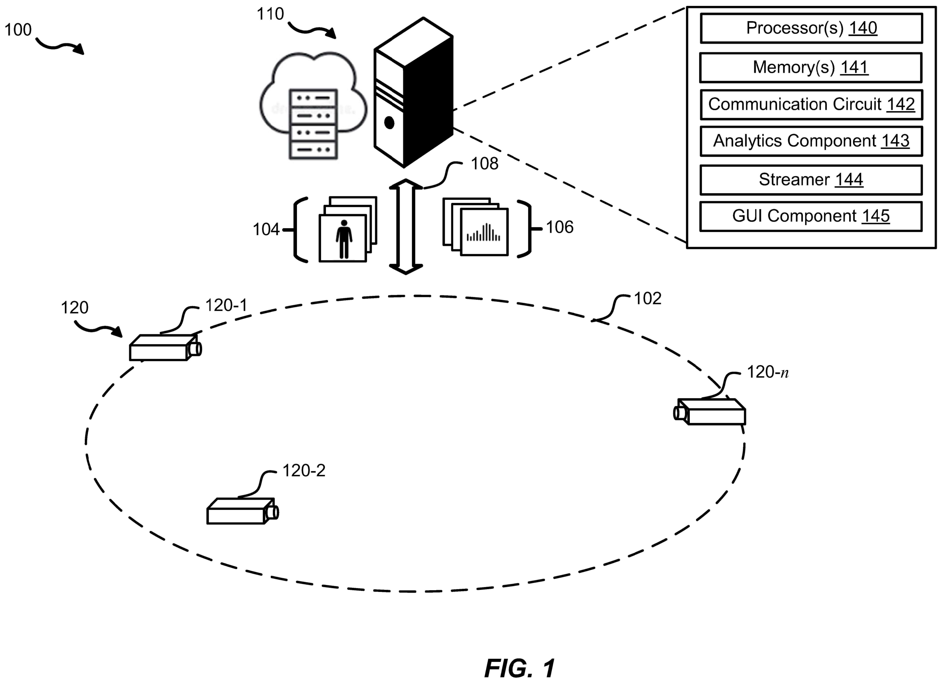

Referring to FIG. 1, an example of an environment 100 for implementing natural language query to a surveillance system according to aspects of the present disclosure includes a server 110. Additionally or alternatively, the server 110 is implemented as a physical system, a virtual system, or a combination thereof. Additionally or alternatively, the server 110 is implemented as a single server or a plurality of servers. The server 110 includes one or more processors 140 configured to execute instructions stored in one or more memories 141. The server 110 includes one or more memories 141 configured to store instructions that, when executed, implement various aspects of the present disclosure. The server 110 includes one or more communication components 142 configured to transmit and/or receive information, such as images, audio information, and/or other control or data information. The server 110 includes an analytics component 143 configured to analyze images 104 and/or audio data 106, and/or a natural language query as discussed in more detail below. In some aspects, images include at least one of one or more still-frames images or one or more videos. The server 110 includes a streamer 144 configured to collect the images, videos, and/or sounds, and provide the collected visual and/or audio data 106 into a stream to the analytics component 143. The server 110 includes a graphical user interface (GUI) component 145 configured to provide a GUI for an operator (e.g., security personnel) to provide natural language queries and/or receive natural language responses and/or questions.

Additionally or alternatively, the environment 100 includes a plurality of cameras 120, such as cameras 120-1, 120-2, ..., and 120-*n* disposed throughout a site 102. Here, *n* is any integer greater than zero. The site 102 is a sport venue, a concert hall, a commercial building, an industrial warehouse, a factory, a residential home, or any other site that is monitored by the plurality of cameras 120-1, 120-2, ..., and 120-*n*. Each of the plurality of cameras 120-1, 120-2, ..., and 120-*n* is configured to capture images 104 of the site 102. The plurality of cameras 120-1, 120-2, ..., and 120-*n* is configured to transmit the captured images 104, as a single stream or multiple streams (e.g., one stream for each camera), to the server 110 via a communication link 108. The communication link 108 is a wired or wireless channel that allows data transmission. Additionally or alternatively, the communication link 108 is one of a copper wire, a fiber optic cable, or the atmosphere.

Additionally or alternatively, each of the plurality of cameras 120-1, 120-2, ..., and 120-*n* includes communication hardware and/or software configured to transmit visual and/or audio data 106. Additionally or alternatively, each of the plurality of cameras 120-1, 120-2, ..., and 120-*n* is connected to one or more devices configured to transmit visual and/or audio data 106. Additionally or alternatively, a camera includes a microphone, and is configured to transmit both visual and/or audio data 106.

In some aspects, the server 110 is configured to identify an event based on a natural language question. The server 110 is configured to identify the event in real-time or substantially real-time. Specifically, the server 110 is configured to identify the event from live streams of the plurality of cameras 120-1, 120-2, ..., and 120-*n*. Additionally or alternatively, the server 110 is configured to identify the event from archived video/images. Additionally or alternatively, visual and/or audio data 106 is used to assist in the identification of the event.

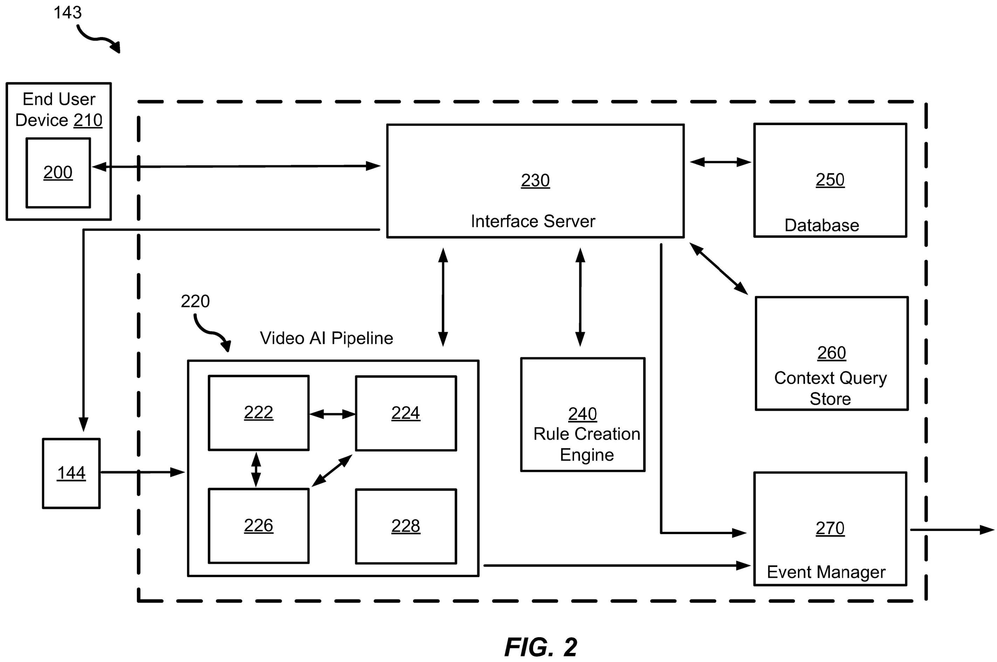

Referring to FIG. 2, an example of the analytics component 143 according to aspects of the present disclosure includes a video artificial intelligence (AI) pipeline 220 configured to perform image identification and/or analysis. Additionally or alternatively, the video AI pipeline 220 includes an object detector 222 configured to detect individual objects in each image of at least one stream. Additionally or alternatively, the object detector 222 highlights individual objects, such as vehicles, people, trees, desks, fires, protective gear, etc.

Additionally or alternatively, the video AI pipeline 220 includes a serving service 224 configured to standardize the execution of multiple AI models. The serving service 224 properly deploys, runs, and/or scales various AI models used in the video AI pipeline 220.

Additionally or alternatively, the video AI pipeline 220 includes a multimodal model 226 configured to process, generate, and/or analyze multiple types of data contemporaneously. The multimodal model 226 is configured to perform tasks such as visual question answering, cross-modal retrieval, text-to-image generation, and image captioning. Here, the multimodal model 226 is implemented by one or more of deep learning transformers, conformers, perceivers, and/or other models known to one skilled in the art.

Additionally or alternatively, the video AI pipeline 220 includes a prompt engine 228 configured to determine whether additional information is needed to identify an event in the images. Specifically, the prompt engine 228 attempts to identify an event from the images based on the questions and/or answers provided. If more information is necessary to narrow down the event, the prompt engine 228 responds accordingly as discussed below.

In some aspects of the present disclosure, the analytics component 143 includes an interface server 230 configured to communicate with a client 200, which includes a network-connected computing entity, implemented in hardware, software, or any combination thereof, that provides an operator-facing interface to exchange natural language inputs, follow-up questions, and responses with the system, and to present outputs such as alarms/alerts, status, and analytics. Additionally or alternatively, the client 200 is an interface application or service provided by the GUI component 145 (FIG. 1) to provide query input (typed, verbal, etc.) for the analytics component 143 and/or display response to the query input. In some aspects, the client 200 is executing/operating on an end user device 210 utilized by an operator (e.g., security personnel). Examples of an end user device 210 include, but are not limited to, a mobile phone, a smart phone, a laptop, a tablet computer, a personal digital assistant, a wearable device (e.g., a smart watch, a head-mounted display, smart glasses, etc.), a desktop computer, a gaming console, an Internet of Things (IoT) device, and/or other computerized devices. Additionally or alternatively, the interface server 230 is configured to communicate with the video AI pipeline 220, a rule creation engine 240, a database 250, a context query store 260, and/or an event manager 270 as described below.

Additionally or alternatively, the analytics component 143 includes the rule creation engine 240 configured to generate and/or refine a rule based on dialogue exchanged with the client 200 through the interface server 230. Additionally or alternatively, the rule creation engine 240 operates a large language model.

Additionally or alternatively, the analytics component 143 includes the database 250 configured to store one or more of the system configurations, camera information, queries generated by the rule creation engine 240, steps of the rules associated with the rule creation engine 240, etc.

Additionally or alternatively, the analytics component 143 includes the context query store 260 configured to identify a context associated with one or more images in one or more streams. The context query store 260 provides a particular set of questions associated with a particular context. Specifically, the particular set of questions are relevant to the particular context. For example, if the images are captured in an airport, the context query store 260 provides questions such as "are there unattended baggage." The set of questions are predetermined or adaptively added by the rule creation engine 240. Additionally or alternatively, the context query store 260 provides a directive to the rule creation engine 240.

Additionally or alternatively, the analytics component 143 includes the event manager 270 configured to synchronize the created natural language rule and the detected event, and to provide a trigger when an event associated with the natural language rule has been identified.

Additionally or alternatively, during normal operations, the plurality of cameras 120-1, 120-2, ..., and 120-*n* are disposed at various locations throughout the site 102 to monitor the site. Specifically, the plurality of cameras 120-1, 120-2, ..., and 120-*n* capture the images 104 of the site 102, and transmit the images 104, via the communication link 108, to the server 110. Each image of the images 104 are transmitted with information such as one or more of a timestamp indicating the time the corresponding image was captured, encryption information (if any), location information associated with captured image, an identifier associated with the camera that captured the image, image quality information (e.g., resolution, colors, etc.), and/or other suitable information.

In some aspects, the communication component 142 of the server 110 receives the images 104 via the communication link 108. The streamer 144 receives the images 104 from the plurality of cameras 120-1, 120-2, ..., and 120-*n* via the communication component 142. The streamer 144 transmits the images 104 as one or more streams to the analytics component 143. The analytics component 143 receives images and/or videos from the streamer 144. Additionally or alternatively, the object detector 222 identifies one or more objects in the images 104 embedded in the one or more streams. Additionally or alternatively, the object detector 222 uses an artificial neural network to identify the one or more objects. An example of the neural network for object identification is described below.

Additionally or alternatively, an operator (not shown) inputs an initial question using natural language via the client 200. The client 200 receives the initial question from the operator, and relays the initial question to the interface server 230. The initial question is associated with the images in the one or more streams. The initial question seeks to identify an event. Additionally or alternatively, the event includes locating an object and/or a person and/or identifying an occurrence/situation. The interface server 230 receives the initial question from the client 200, and, additionally or alternatively, transmits the initial question to the rule creation engine 240. Based on the initial question, the rule creation engine 240 generates one or more follow-up questions for the operator. The rule creation engine 240 transmits the one or more follow-up questions to the interface server 230. The interface server 230 transmits the one or more follow-up questions to the client 200 to solicit additional input from the operator.

In some aspects, the client 200 provides the one or more follow-up questions to the operator. The client 200 receives one or more follow-up responses from the operator, and relays the one or more follow-up responses to the interface server 230. The interface server 230 provides the one or more follow-up responses to the rule creation engine 240. Additionally or alternatively, the rule creation engine 240 iteratively generates and/or refines the one or more follow-up questions.

Additionally or alternatively, the interface server 230 provides a question list, including the initial question and/or the one or more follow-up questions and the associated responses, to the prompt engine 228 of the video AI pipeline 220. Additionally or alternatively, the multimodal model 226 matches the question list to an event. If a positive match of the event is identified, the video AI pipeline 220 transmits the identified event and/or the metadata associated with the identified event to the event manager 270. The interface server 230 provides the natural language rule to the event manager 270. In response to receiving the identified event information and/or the natural language rule, the event manager 270 transmits an indication that the event (or a candidate for the event) described by the natural language rule has been identified.

Additionally or alternatively, after the interface server 230 providing the question list to the prompt engine 228, the multimodal model 226 is unable to identify an event due to a number of potential matches. Accordingly, the prompt engine 228 provides updated questions/criteria to the interface server 230 to narrow down the potential matches to a positive match. The interface server 230 sends the updated questions/criteria to the rule creation engine 240 to generate additional questions for the operator. As the rule creation engine 240 receives additional inputs from the interface server 230, the rule creation engine 240 refines the one or more rules used to identify the event. The process above is repeated iteratively until a positive match is identified or the analytics component 143 confirms that no match is identified.

Additionally or alternatively, the interface server 230 receives a list of context-based questions from the context query store 260. Additionally or alternatively, the rule creation engine 240 generates the natural language questions based on the context provided in the context-based questions. Additionally or alternatively, the context and/or the context-based questions are preprogrammed and/or predetermined. The context and/or the context-based questions are provided to the analytics component 143 according to information associated with the environment 100 (FIG. 1).

Additionally or alternatively, the interface server 230 transmits the question list generated by the rule creation engine 240 to the database for storage. If the same/similar question is asked in the future, the interface server 230 provides the list of questions to the client 200.

In a first example of operation, security personnel (not shown) inputs a natural language question, via the client 200, to inquire about the presence of a fire. The security personnel verbally asks "is there a fire?" Additionally or alternatively, the client 200 uses a speech-to-text method to convert the verbal question to a textual question. The client 200 transmits the question to the interface server 230. Additionally or alternatively, the rule creation engine 240 and/or the prompt engine 228 iteratively generates a list of questions as a follow-up. For example, the client 200 provides follow-up questions such as "would you like to see if there is any smoke," "would you like to see if there is an elevated temperature at any location," and/or "would you like to see if there are people running?" Additionally or alternatively, based on the responses provided to the client 200, the rule creation engine 240 generates one or more rules used to identify the presence of a fire. Next, the video AI pipeline 220 identifies one or more events based on the one or more rules generated by the rule creation engine 240. Additionally or alternatively, the event manager 270 outputs the one or more events associated with the natural language question of "is there a fire." In one instance, the event manager 270 identifies one or more of a particular video stream from a camera capturing the one or more events, one or more images/videos of the one or more events, locations of the one or more events, and/or other information relevant to the one or more events. Additionally or alternatively, the event manager 270 displays the images/videos of the one or more events onto the client 200 for the operator. Additionally or alternatively, the event manager 270 alerts appropriate personnel (e.g., fire department). Additionally or alternatively, other actions are also taken when outputting the one or more events.

In a second example of operation, security personnel (not shown) inputs a natural language question, via the client 200, to inquire about a lost child. The security personnel types "find the lost child." The client 200 transmits the question to the interface server 230. Additionally or alternatively, the rule creation engine 240 and/or the prompt engine 228 iteratively generates a list of questions as a follow-up. For example, the client 200 provides follow-up questions such as "what is the gender of the child," "what clothes is the child wearing," "what colors are the shoes of the missing child," and/or "would you like to identify any crying child?" Additionally or alternatively, based on the responses provided to the client 200, the rule creation engine 240 generates one or more rules used to locate the lost child. Next, the video AI pipeline 220 identifies one or more events. Additionally or alternatively, the event manager 270 outputs the one or more events associated with the natural language query of "find the lost child." In one instance, the event manager 270 identifies one or more of a particular video stream from of a camera capturing the one or more events, one or more images/videos of the one or more events, locations of the one or more events, and/or other information relevant to the one or more events. Additionally or alternatively, the event manager 270 displays the images/videos of the one or more events onto the client 200 for the operator. Additionally or alternatively, the event manager 270 alerts appropriate personnel (e.g., the police department and/or other security personnel). Additionally or alternatively, other actions are taken when outputting the one or more events.

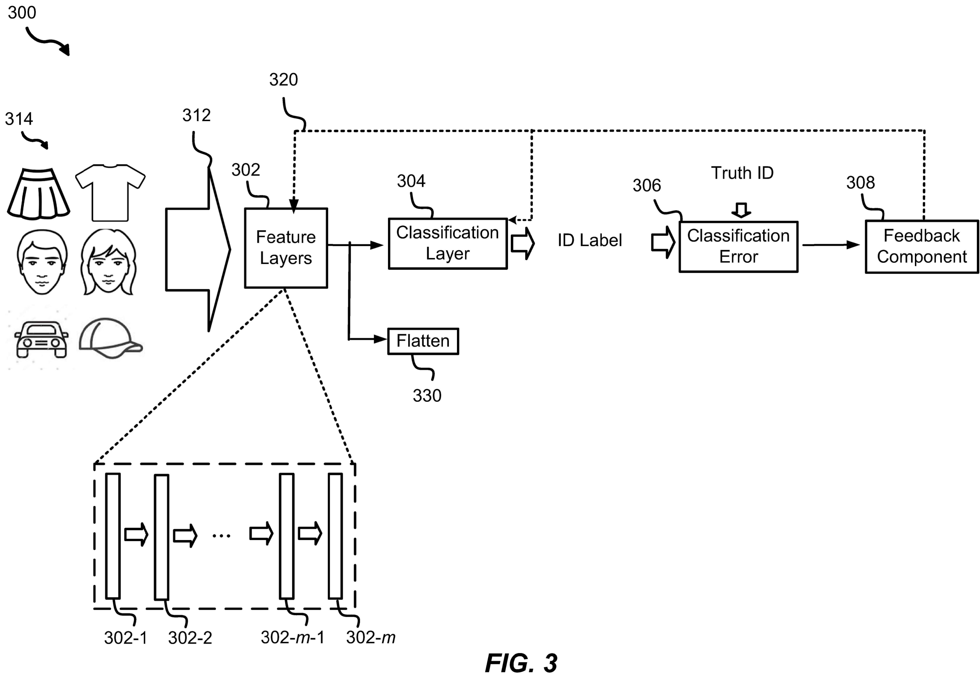

Additionally or alternatively, referring to FIG. 3, an example of training a neural network 300 for identification includes feature layers 302 that receive training images 312 of features/objects/environment 314. The training images 312 include images of the features/objects/environment 314 from different angles, under different lighting conditions, partial images of the features/objects/environment 314, etc. Additionally or alternatively, the feature layers 302 are a deep learning algorithm that includes feature layers 302-1, 302-2..., 302-*m*-1, 302-*m*, where *m* is a positive integer. Each of the feature layers 302-1, 302-2..., 302-*m*-1, 302-*m* performs a different function and/or algorithm (e.g., pattern detection, transformation, feature extraction, etc.). In a non-limiting example, the feature layer 302-1 identifies edges of the training images 312, the feature layer 302-2 identifies corners of the training images 312, the feature layer 302-*m*-1 performs a non-linear transformation, and the feature layer 302-*m* performs a convolution. In another example, the feature layer 302-1 applies an image filter to the training images 312, the feature layer 302-2 performs a Fourier Transform to the training images 312, the feature layer 302-*m*-1 performs an integration, and the feature layer 302-*m* identifies a vertical edge and/or a horizontal edge. Additionally or alternatively, other implementations of the feature layers 302 are used to extract features of the training images 312.

Additionally or alternatively, the output of the feature layers 302 are provided as input to a classification layer 304. The classification layer 304 is configured to identify the features (e.g., appearance, height, built, hair color, ethnicity, etc.), objects (e.g., accessories such as hats and glasses, clothing, and/or jewelry worn by a person), and/or environmental information (e.g., cars driven, potential witnesses, accomplices, etc.) associated with a person.

Additionally or alternatively, the classification layer 304 outputs the ID label. Additionally or alternatively, a classification error component 306 receives the ID label and a ground truth ID as input. The ground truth ID is the "correct answer" provided by a trainer (not shown) to the neural network 300 during training. For example, the neural network 300 compares the ID label to the ground truth ID to determine whether the classification layer 304 properly identifies the features/objects/environment associated with the ID label.

Additionally or alternatively, the neural network 300 includes a feedback component 308. Additionally or alternatively, based on the ID label and the ground truth ID, the classification error component 306 outputs an error into the feedback component 308. The feedback component 308 receives the error and provides one or more updated parameters 320 to the feature layers 302 and/or the classification layer 304. The one or more updated parameters 320 includes modifications to parameters and/or equations to reduce the error.

Additionally or alternatively, the neural network 300 includes a flatten function 330 that generates a final output of the feature extraction step. For example, the flatten function 330 is an operator that transforms a matrix of features into a vector. The output of the neural network 300 includes a vector describing the features/objects/environment.

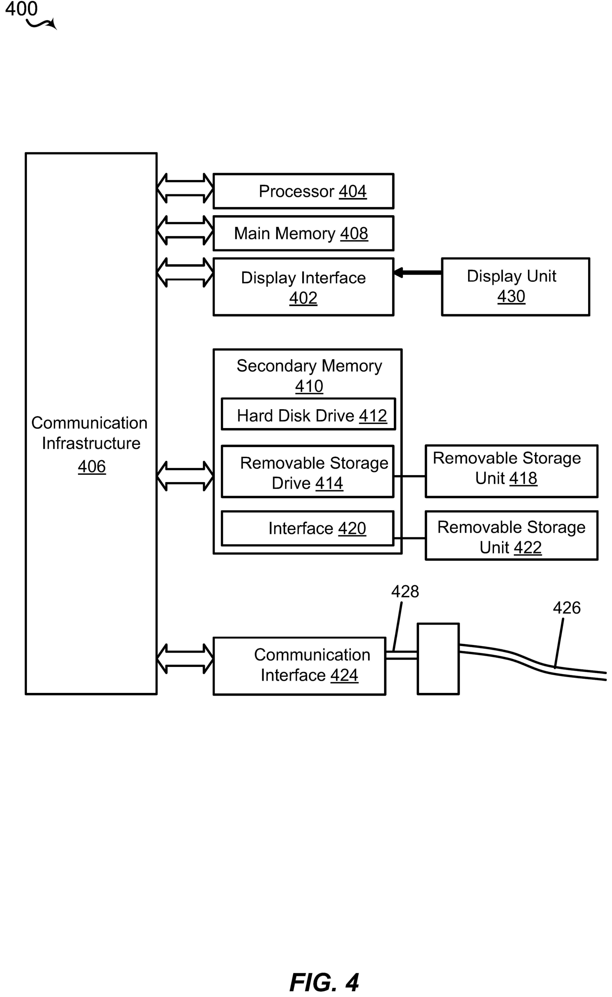

Additionally or alternatively, aspects of the present disclosures, such as the server 110, are implemented using hardware, software, or a combination thereof and are implemented in one or more computer systems or other processing systems. Additionally or alternatively, features are directed toward one or more computer systems capable of carrying out the functionality described herein. An example of such a computer system 400 is shown in FIG. 4. Additionally or alternatively, the server 110 includes some or all of the components of the computer system 400.

The computer system 400 includes one or more processors, such as processor 404. The processor 404 is connected with a communication infrastructure 406 (e.g., a communications bus, cross-over bar, or network). Additionally or alternatively, the term "bus," as used herein, refers to an interconnected architecture that is operably connected to transfer data between computer components within a singular or multiple systems. Additionally or alternatively, the bus is a memory bus, a memory controller, a peripheral bus, an external bus, a crossbar switch, and/or a local bus, among others. Various software aspects are described in terms of this example computer system. After reading this description, it will become apparent to a person skilled in the relevant art(s) how to implement aspects of the disclosures using other computer systems and/or architectures.

Additionally or alternatively, the computer system 400 includes a display interface 402 that forwards graphics, text, and other data from the communication infrastructure 406 (or from a frame buffer not shown) for display on a display unit 430. Computer system 400 also includes a main memory 408, preferably random access memory (RAM), and, additionally or alternatively, also includes a secondary memory 410. Additionally or alternatively, the secondary memory 410 includes, for example, a hard disk drive 412, and/or a removable storage drive 414, representing a floppy disk drive, a magnetic tape drive, an optical disk drive, a universal serial bus (USB) flash drive, etc. The removable storage drive 414 reads from and/or writes to a removable storage unit 418 in a well-known manner. Removable storage unit 418 represents a floppy disk, magnetic tape, optical disk, USB flash drive etc., which is read by and written to removable storage drive 414. As will be appreciated, the removable storage unit 418 includes a computer usable storage medium having stored therein computer software and/or data. Additionally or alternatively, one or more of the main memory 408, the secondary memory 410, the removable storage unit 418, and/or the removable storage unit 422 are a non-transitory memory.

Alternative aspects of the present disclosures include the secondary memory 410 and include other similar devices for allowing computer programs or other instructions to be loaded into computer system 400. Such devices include, for example, a removable storage unit 422 and an interface 420. Examples of such include a program cartridge and cartridge interface (such as that found in video game devices), a removable memory chip (such as an erasable programmable read only memory (EPROM), or programmable read only memory (PROM)) and associated socket, and other removable storage units 422 and interfaces 420, which allow software and data to be transferred from the removable storage unit 422 to computer system 400.

Additionally or alternatively, computer system 400 includes a communications interface 424. Communications interface 424 allows software and data to be transferred between computer system 400 and external devices. Examples of communications interface 424 include a modem, a network interface (such as an Ethernet card), a communications port, a Personal Computer Memory Card International Association (PCMCIA) slot and card, etc. Software and data transferred via communications interface 424 are in the form of signals 428, which are electronic, electromagnetic, optical or other signals capable of being received by communications interface 424. These signals 428 are provided to communications interface 424 via a communications path (e.g., channel) 426. This path 426 carries signals 428 and are implemented using wire or cable, fiber optics, a telephone line, a cellular link, an RF link and/or other communications channels. In this document, the terms "computer program medium" and "computer usable medium" are used to refer generally to media such as a removable storage unit 418, a hard disk installed in hard disk drive 412, and signals 428. These computer program products provide software to the computer system 400. Aspects of the present disclosures are directed to such computer program products.

Computer programs (also referred to as computer control logic) are stored in main memory 408 and/or secondary memory 410. Additionally or alternatively, computer programs are also be received via communications interface 424. Such computer programs, when executed, enable the computer system 400 to perform the features in accordance with aspects of the present disclosures, as discussed herein. In particular, the computer programs, when executed, enable the processor 404 to perform the features in accordance with aspects of the present disclosures. Accordingly, such computer programs represent controllers of the computer system 400.

In an additional or alternative aspect of the present disclosures where the method is implemented using software, the software is stored in a computer program product and loaded into computer system 400 using removable storage drive 414, hard drive 412, or communications interface 420. The control logic (software), when executed by the processor 404, causes the processor 404 to perform the functions described herein. In another aspect of the present disclosures, the system is implemented primarily in hardware using, for example, hardware components, such as application specific integrated circuits (ASICs). Implementation of the hardware state machine so as to perform the functions described herein will be apparent to persons skilled in the relevant art(s).

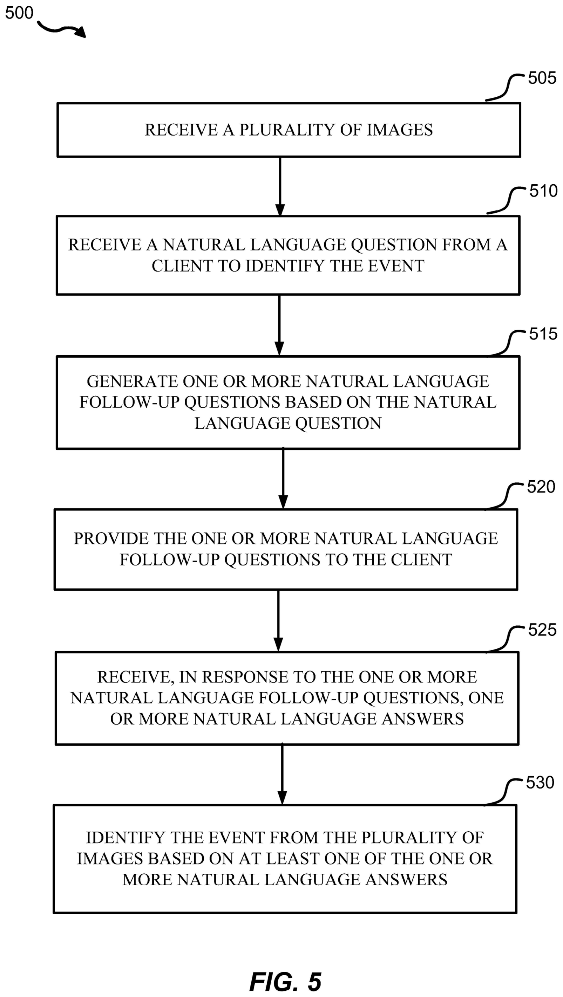

Referring to FIG. 5, an example of a method for identifying an event based on a natural language question according to aspects of the present disclosure is performed by the server 110, the computer system 400, and/or one or more subcomponents of the server 110 and/or the computer system 400.

At 505, the method 500 includes receiving a plurality of images. For example, the communication component 142, the analytics component 143, the streamer 144, the one or more processors 140, and/or the server 110 are configured to, and/or provide means for, receiving a plurality of images. Additionally or alternatively, the images are grouped to form a video stream, and/or separated into separate images.

Additionally or alternatively, in one example, which should not be construed as limiting, the plurality of cameras 120-1, 120-2, ..., and 120-*n* disposed throughout the site 102 capture images 104 of the site and transmit those images over the communication link 108 to the server 110. Each camera 120 includes communication hardware/software to send visual data and, in some cases, associated audio, and tags each image 104 with metadata such as a timestamp, camera identifier, location information, and image quality indicators. Additionally or alternatively, the communication link 108 is wired and/or wireless and carries the image data as one or more streams from the cameras 120-1, 120-2, ..., and 120-*n* toward the server 110.

At the server 110, the communication component 142 receives the images 104 and forwards them to the streamer 144. Additionally or alternatively, the streamer 144 aggregates the incoming feeds and provides them as one or more streams to the analytics component 143, while writing the received data into the one or more memories 141 under control of the processors 140. Additionally or alternatively, depending on configuration, the streamer 144 preserves the per-camera stream boundaries or multiplexes frames from multiple cameras, and the associated metadata (e.g., timestamps, camera ID, and location) is maintained with each frame so downstream modules associates content with its source. Thus, in this manner, the server 110 performs the receiving the plurality of images of a site and prepares those images for subsequent processing by the analytics component 143.

At 510, the method 500 includes receiving a natural language question from a client to identify the event. For example, the communication component 142, the analytics component 143, the GUI component 145, the one or more processors 140, and/or the server 110 are configured to, and/or provide means for, receiving a natural language question from a client to identify the event.

Additionally or alternatively, in one example, which should not be construed as limiting, an operator at the end user device 210 uses the client 200 to enter a natural language question via a text field rendered by the GUI component 145 (or by speaking into a microphone where the client 200 performs local voice-to-text). Additionally or alternatively, the client 200 packages the question with session metadata (e.g., a timestamp, operator identifier, and a facility or camera context selected in the UI) and transmits the message to the server 110. Additionally or alternatively, the communication component 142 of the server 110 receives the message and forwards the message to the interface server 230, which validates the payload, associates the payload with the active session maintained for the client 200, and writes the questions and the metadata to the database 250. Additionally or alternatively, the interface server 230 then exposes the normalized natural language question to the analytics component 143 (e.g., by enqueueing the normalized natural language question for subsequent processing by the rule creation engine 240 and/or prompt engine 228), thereby performing the receipt of one or more natural language questions from the client 200 for identifying an event.

At 515, the method 500 includes generating one or more natural language follow-up questions based on the natural language question. For example, the analytics component 143, the one or more processors 140, and/or the server 110 are configured to, and/or provide means for, generating one or more natural language follow-up questions based on the natural language question.

Additionally or alternatively, in one example, which should not be construed as limiting, after the normalized natural language question from the client 200 is stored in the database 250 at 510, the interface server 230 forwards the questions and associated session/context metadata (e.g., camera IDs, timestamps, and site 102 identifiers derived from images 104) to the rule creation engine 240. Additionally or alternatively, the rule creation engine 240 executes a large language model, for example, to parse the question into an intent schema with slots and confidence scores. The intent schema is a structured, machine-readable representation of an operator's requested task derived from a natural language question. The intent schema encodes the high-level intent (e.g., "detect fire," "locate boy") together with the parameters required to execute that task using the analytics of the system (such as target area, time window, object attributes, and output format). The intent schema provides a canonical form that downstream components validate, refine via follow-up questions, and bind to video analytics operations, enabling deterministic execution independent of the original phrasing of the question. Slots are individual, typed parameters within the intent schema that capture specific pieces of information necessary to fulfill the intent. Each slot has an expected value type and constraints (for example, categorical values like object type or color; numeric ranges like time windows or count thresholds; spatial constraints like camera IDs or zones; or boolean flags like "include pedestrians"). Slots are populated from the initial natural language question, inferred from scene context, or completed through follow-up questions, and they directly condition the analytics (for example, filtering frames by camera and time, or restricting detections to objects matching specified attributes). Confidence scores are quantitative measures associated with the parsed intent and each slot that estimate the certainty in the correctness or completeness of the extracted values. These scores are computed by the language and multimodal models using features such as parsing probabilities, agreement across alternative parses, and consistency with scene context. The scores govern control flow by identifying low-confidence or missing slots that should trigger follow-up questions, setting thresholds for when execution proceeds, and weighting competing hypotheses during ranking to minimize erroneous actions and unnecessary dialogue. Additionally or alternatively, the rule creation engine 240 consults the context query store 260 for context-relevant interrogatives keyed by the current scene context (e.g., venue type, time-of-day, active cameras), and computes which required slots are missing or below a confidence threshold. Additionally or alternatively, the prompt engine 228 synthesizes candidate follow-up questions by combining (i) the low-confidence or unsatisfied slots from the rule creation engine 240, (ii) the context-specific templates retrieved from the context query store 260, and (iii) live scene hints produced by the analytics component 143 (for example, the object detector 222 counts and location distributions from recent frames delivered by streamer 144). Additionally or alternatively, to reduce unnecessary dialogue, the prompt engine 228 queries the multimodal model 226 on sampled frames to estimate the discriminative value of each candidate (e.g., expected reduction in hypothesis set size) and ranks candidates accordingly.

Additionally or alternatively, the top-ranked one or more follow-up questions are serialized into a message payload with identifiers linking each question to its target slot(s) and expected answer type, persisted to the database 250 for session continuity, and returned to the client 200 via the interface server 230. Additionally or alternatively, upon receiving answers from the client 200, the interface server 230 routes them back to rule creation engine 240, which updates the intent/slot state and re-runs the above loop as needed until the confidence and completeness criteria are met, thereby iteratively generating one or more natural language follow-up questions based on the prior inputs and current scene context.

At 520, the method 500 includes providing the plurality of natural language follow-up questions to the client. For example, the communication component 142, the analytics component 143, the GUI component 145, the one or more processors 140, and/or the server 110 are configured to, and/or provide means for, providing the plurality of natural language follow-up questions to the client.

Additionally or alternatively, in one example, which should not be construed as limiting, the prompt engine 228 outputs the top-ranked follow-up questions as a structured payload that includes a session identifier, per-question identifiers, target slot identifiers, expected answer types (e.g., categorical, numeric range, free text, boolean), confidence thresholds, and optional context hints. Additionally or alternatively, the interface server 230 retrieves this payload from the database 250, attaches transport metadata (timestamps, message sequence numbers, and a client 200 session token), and transmits it over a persistent application channel (for example, an authenticated WebSocket maintained by communication component 142) to the client 200 executing on the end user device 210. Additionally or alternatively, upon receipt, the client 200 acknowledges the delivery with a message-level receipt so the interface server 230 commits the payload state and schedule retries if needed.

Additionally or alternatively, the GUI component 145 on the client 200 renders each follow-up question with UI controls bound to the declared answer type, and displays context from the analytics component 143 such as recent thumbnails or camera identifiers to disambiguate the question. Additionally or alternatively, if configured, the client 200 performs local text-to-speech to read the questions aloud and pre-populates selectable choices derived from the context query store 260. Additionally or alternatively, the GUI component 145 records operator inputs with per-question identifiers and timestamps, queues partial answers for autosave, and, when the operator submits, packages the responses with the original question identifiers and session token and returns them to the interface server 230 for processing by the rule creation engine 240. This end-to-end exchange thereby provides the one or more natural language follow-up questions to the client with delivery guarantees, session continuity, and type-aware rendering for efficient operator response.

At 525, the method 500 includes receiving, in response to the one or more natural language follow-up questions, one or more natural language answers. For example, the communication component 142, the analytics component 143, the GUI component 145, the one or more processors 140, and/or the server 110 are configured to, and/or provide means for, receiving, in response to the plurality of natural language follow-up questions, a plurality of natural language answers.

Additionally or alternatively, in one example, which should not be construed as limiting, the client 200 executing on the end user device 210 captures the operator's answers in the GUI component 145, binds each answer to the corresponding question identifier and target slot identifier, and serializes the answers into a typed payload that includes the session token, message sequence number, timestamps, and a checksum. Additionally or alternatively, the client 200 transmits the payload over an authenticated, persistent application channel maintained by the communication component 142 (e.g., a TLS-secured WebSocket) to the server 110. Additionally or alternatively, the communication component 142 delivers the payload to the interface server 230, which verifies the session token and sequence number for idempotency, validates each answer against the declared schema (e.g., categorical domain membership, numeric range bounds, and string length limits), normalizes units and formats (such as time zones or camera identifiers), and writes the validated answers with their question/slot links to the database 250 under control of the processors 140.

Additionally or alternatively, upon successful persistence, the interface server 230 returns an application-level acknowledgment to the client 200 and updates delivery state to prevent duplicate processing; if validation fails, the interface server 230 returns structured error details so the GUI component 145 prompts the operator to correct the entries. Additionally or alternatively, the interface server 230 the notifies rule creation engine 240 that new answers are available for the active session, enabling downstream updates to the intent schema and slot values as described above. This sequence is one example of receiving, in response to the one or more natural language follow-up questions, one or more natural language answers with authenticated transport, schema validation, durable storage in the database 250, and reliable handoff for continued processing.

At 530, the method 500 includes identifying the event from the plurality of images based on at least one of the one or more natural language answers. For example, the communication component 142, the analytics component 143, the one or more processors 140, and/or the server 110 are configured to, and/or provide means for, identifying the event from the plurality of images based on the plurality of natural language answers.

Additionally or alternatively, in one example, which should not be construed as limiting, after the rule creation engine 240 has resolved the intent schema and populated required slots from the operator's inputs and answers, the interface server 230 forwards the finalized task specification to the analytics component 143. The streamer 144 supplies recent frames from the cameras 120-1, 120-2, ..., and 120-n, which are processed by the object detector 222 (optionally via the serving service 224) to generate detections and tracklets. Additionally or alternatively, detections are per-frame outputs produced by the object detector 222 (optionally served via the serving service 224) over frames supplied by the streamer 144. Additionally or alternatively, each detection represents a localized instance of an object of interest (for example, a fire, a person, a helmet) and includes at least a bounding box or segmentation mask, an object class label, a confidence score, and optional appearance features or embeddings. Additionally or alternatively, detections are tagged with frame/time indices, camera identifiers, and scene metadata so downstream components (such as the multimodal model 226) filter, aggregate, and reason over them when generating metadata and evaluating task constraints. Tracklets are temporally associated sequences of detections that represent the continuous trajectory of the same physical object across successive frames from a given camera stream. They are created by a data-association process that links detections frame-to-frame using motion models and/or appearance embeddings (e.g., Kalman filtering with assignment algorithms), and they maintain a persistent track ID, start/end timestamps, per-frame states (position, size, confidence), and derived kinematics (velocity, heading, dwell time). Additionally or alternatively, tracklets enable robust counting, handoff through brief occlusions, and event inference by the multimodal model 226 under the task constraints provided by the interface server 230 and the rule creation engine 240. Additionally or alternatively, the multimodal model 226 evaluates these detections against the task constraints (e.g., zone identifiers, time window, and object attributes) and emits structured metadata. Additionally or alternatively, the server 110 parses the metadata to determine whether conditions satisfy an action trigger defined by the task (for example, fire detected), and posts the resulting event and payload (camera ID, timestamp, affected zone/spot, confidence, and thumbnails) to the event manager 270. Additionally or alternatively, the event manager 270 correlates the event with the natural language rule state, assigns a unique event identifier, and sets the appropriate action type (e.g., triggering an alarm/alert in a graphical user interface for display to an operator (e.g., via client 200), on-site actuation of an alarm or warning system).

Additionally or alternatively, upon trigger, the event manager 270 transmits an action message to the interface server 230 for delivery to the client 200 and, where configured, to site systems. Additionally or alternatively, the interface server 230 formats the message for the GUI component 145 and the client 200, attaching transport metadata and links to the underlying evidence (frame indices, camera identifiers, and cropped thumbnails), and sends the message over the authenticated channel maintained by communication component 142 to the client 200 on the end user device 210. Additionally or alternatively, the client 200 renders an alarm/alert with the action type and contextual data and prompts the operator for acknowledgement. In parallel, if the action requires site actuation (such as activating an on-site alarm or warning system), the interface server 230 forwards a control directive to the appropriate on-premises controller via the communication component 142, and records acknowledgements and state transitions in the database 250. This sequence is one, non-limiting example of performing one or more actions-such as outputting the alarm/alert and optionally commanding alarm or warning system control-based on the natural language questions and answers, with deterministic linkage to the analyzed video evidence.

In an alternative or additional aspect, the method 500 further includes identifying the plurality of images using a neural network.

Additionally or alternatively, in one example, which should not be construed as limiting, the streamer 144 supplies batched frames from the cameras 120-1, 120-2, ..., and 120-n to the analytics component 143, which invokes the object detector 222 via the serving service 224. Additionally or alternatively, the serving service 224 performs inference preprocessing on each frame, including color space normalization, aspect-preserving resize with padding, and per-channel mean/variance normalization, and then dispatches the batch to a GPU-accelerated instance of a convolutional/transformer-based neural network 300. Additionally or alternatively, the neural network 300 executes a forward pass to produce per-region class logits and regressed bounding boxes (and optionally segmentation masks or keypoints), after which post-processing applies confidence thresholding and non-maximum suppression to yield final per-frame detections with class labels and confidence scores.

Additionally or alternatively, for each frame, the detections are annotated with the originating camera identifier, timestamp, and scene context carried by the streamer 144 and are serialized as part of the metadata for downstream consumers. Additionally or alternatively, where configured, embeddings from intermediate layers of the neural network 300 are exported with each detection to support short-term association into tracklets and to improve re-identification across occlusions. Additionally or alternatively, the server 110 consumes the metadata to filter for object classes relevant to a requested task (for example, fires). Thus, this sequence provides one example of identifying the plurality of images with a neural network by executing the object detector 222 under the serving service 224 over frames delivered by the streamer 144, producing normalized, de-duplicated detections that are time- and camera-aligned for subsequent reasoning by the analytics component 143.

In an alternative or additional aspect, the method 500 further includes generating the one or more natural language follow-up questions based on a large language model.

Additionally or alternatively, in one example, which should not be construed as limiting, the rule creation engine 240 performs the generation using a large language model hosted within the analytics component 143. Additionally or alternatively, the interface server 230 retrieves the current dialogue state and intent schema from the database 250, along with scene context keys (e.g., active camera IDs, time window, venue type) obtained from streamer 144 and prior metadata, and supplies this material to the rule creation engine 240. Additionally or alternatively, the rule creation engine 240 constructs an LLM input that includes: (i) a system prompt describing the task (produce follow-up questions that resolve low-confidence or missing slots), (ii) the normalized user input and any prior answers, (iii) the current intent schema with slot definitions and confidence scores, and (iv) context query candidates retrieved from the context query store 260. Additionally or alternatively, the input further specifies a constrained output format (for example, a JSON schema enumerating question text, target slot identifiers, expected answer type, and optional choice sets), and decoding parameters (temperature, top-p) tuned to favor determinism.

Additionally or alternatively, the LLM executes to produce a set of candidate follow-up questions, each explicitly bound to one or more unresolved slots and annotated with the expected answer type and rationale. Additionally or alternatively, the rule creation engine 240 validates the LLM output against the declared schema, filters questions that are redundant with previously asked items recorded in the database 250, and calls the multimodal model 226 with sampled frames from the streamer 144 to score each candidate's expected discriminative value under current scene conditions. Additionally or alternatively, the prompt engine 228 ranks the validated candidates using these scores and slot criticality, resolves any templated choices using entries from context query store 260 (for example, enumerating zone names or camera IDs), and serializes the top-ranked questions with per-question identifiers for persistence in the database 250. Additionally or alternatively, the interface server 230 then packages the payload with session metadata for delivery to the client 200, completing generation of the one or more natural language follow-up questions based on a large language model with schema-constrained decoding, context retrieval, and scene-aware ranking.

In an alternative or additional aspect, the method 500 further includes retrieving a plurality of context-based questions based on a context of the plurality of images.

Additionally or alternatively, in one example, which should not be construed as limiting, the analytics component 143 derives a scene context key from recent frames and metadata delivered by the streamer 144, including active camera identifiers, site 102 attributes, time-of-day bucket, day-of-week, detected activity summaries from the object detector 222 and the multimodal model 226, and any currently active events from the event manager 270. Additionally or alternatively, the interface server 230 packages these context features into a normalized context vector and issues a retrieval request to the context query store 260 over an internal API that supports keyed lookups and similarity search. Additionally or alternatively, the context query store 260 maintains a versioned catalog of question templates indexed by discrete keys (e.g., venue type, camera zone, operating hours) and by learned embeddings for approximate nearest-neighbor retrieval; upon receiving the request, it performs a primary key match on the discrete fields and a secondary vector search on the embedding derived from the context vector to assemble a candidate set of context-based questions. Additionally or alternatively, each candidate is returned with associated metadata, including applicable scopes (camera IDs or zones), required slot bindings, optional choice enumerations (e.g., zone names, entry gates), and confidence/ranking scores. Additionally or alternatively, the interface server 230 validates the payload, filters out templates already asked in the active session recorded in the database 250, resolves dynamic enumerations against current site 102 configuration, and persists the resulting list to database 250 with a session identifier and template versioning for auditability. Additionally or alternatively, the rule creation engine 240 and the prompt engine 228 then consume the stored list to condition generation of one or more natural language follow-up questions, ensuring that questions surfaced to the client 200 are tailored to the current scene and reduce ambiguity without redundant dialogue.

In an alternative or additional aspect, the method 500 further includes generating the plurality of natural language follow-up questions based on the context of the plurality of images.

Additionally or alternatively, in one example, which should not be construed as limiting, the analytics component 143 derives a scene context vector from recent frames and metadata delivered by the streamer 144, including active camera identifiers from cameras 120-1, 120-2, ..., and 120-n, site 102 attributes, a time-of-day bucket, day-of-week, and activity summaries computed from object detector 222 and multimodal model 226. Additionally or alternatively, the interface server 230 packages these features and issues a retrieval to context query store 260, which maintains question templates indexed by discrete keys (e.g., venue type, camera zones) and by learned embeddings for similarity search. Additionally or alternatively, the context query store 260 returns a candidate set of context-aligned templates with associated scopes (camera IDs or zones), required slot bindings, and optional enumerations (e.g., zone names, entry gates). Additionally or alternatively, the interface server 230 filters out templates previously asked in the current session recorded in database 250 and resolves any dynamic enumerations against the current site 102 configuration.

Additionally or alternatively, the prompt engine 228 then instantiates the remaining templates into concrete follow-up questions by binding them to unresolved or low-confidence slots identified by the rule creation engine 240 for the active task, and conditions each question on the current scene (for example, constraining area choices to cameras currently online or zones showing activity). Additionally or alternatively, the multimodal model 226 is optionally invoked on sampled frames from the streamer 144 to estimate the discriminative value of each candidate under present conditions (e.g., expected reduction in hypothesis set size), and the prompt engine 228 ranks the candidates accordingly. Additionally or alternatively, the top-ranked, context-conditioned questions are serialized with per-question identifiers, target slot identifiers, expected answer types, and any resolved choice sets, and are persisted to the database 250 for delivery, thereby generating the one or more natural language follow-up questions based on the context of the plurality of images.

In an alternative or additional aspect, the method 500 further includes displaying a subset of images associated with the identified event onto the client. In an alternative or additional aspect, the method 500 further includes triggering, in response to the identified event, an alarm in a graphical user interface for display to an operator. In an alternative or additional aspect, the method 500 further includes forwarding, in response to the identified event, a control directive to a controller at a site that the plurality of images capture to actuate an alarm or warning system at the site.

Additionally or alternatively, in one example, which should not be construed as limiting, the streamer 144 supplies time-aligned frames from the cameras 120-1, 120-2, ..., and 120-n to the analytics component 143. Additionally or alternatively, the object detector 222 (served via the serving service 224) produces per-frame detections and tracklets for the identified event, and the multimodal model 226 fuses these with the site 102 geometry to emit metadata. Additionally or alternatively, the event manager 270 correlates the event with the natural language rule state, assigns a unique event identifier, and sets the appropriate action type (e.g., triggering an alarm/alert in a graphical user interface for display to an operator (e.g., via client 200), on-site actuation of an alarm or warning system). Additionally or alternatively, the client 200 renders an alarm/alert with the action type and contextual data and prompts the operator for acknowledgement. In parallel, if the action requires site actuation (such as activating an on-site alarm or warning system), the interface server 230 forwards a control directive to the appropriate on-premises controller via the communication component 142, and records acknowledgements and state transitions in the database 250. This sequence is one, non-limiting example of performing one or more actions-such as outputting the alarm/alert and optionally commanding alarm or warning system control-based on the natural language questions and answers, with deterministic linkage to the analyzed video evidence.

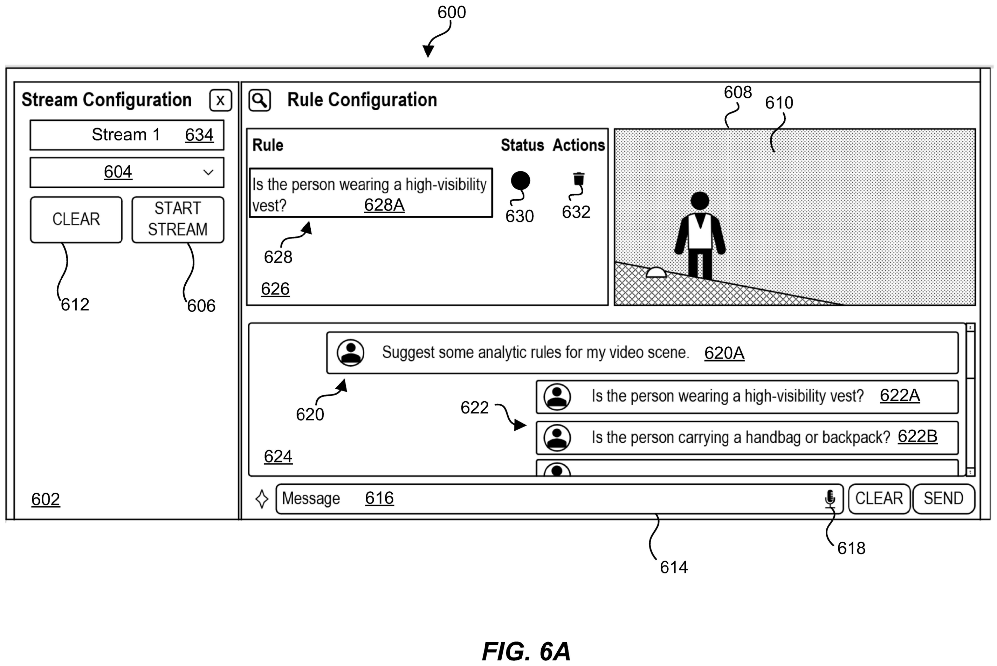

FIG. 6A is an example user interface 600 displaying a first example video scene 610 of a first stream with an example natural language (NL) rule 628 applied, according to some aspects of the present disclosure. Additionally or alternatively, the server 110 (FIG. 1) provides (e.g., via GUI component 145 in FIG. 1) the user interface 600 that enables an operator (e.g., security personnel) to provide one or more NL questions (i.e., NL queries) and/or receive one or more NL answers and/or one or more NL follow-up questions. In some aspects, the user interface 600 is displayed onto the client 200 (FIG. 2).

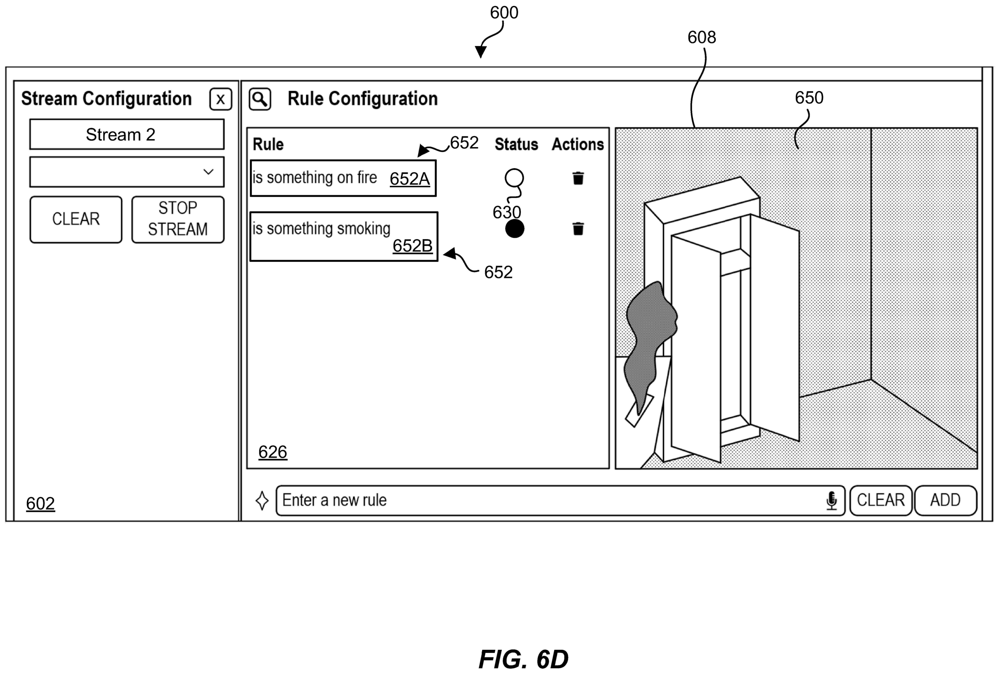

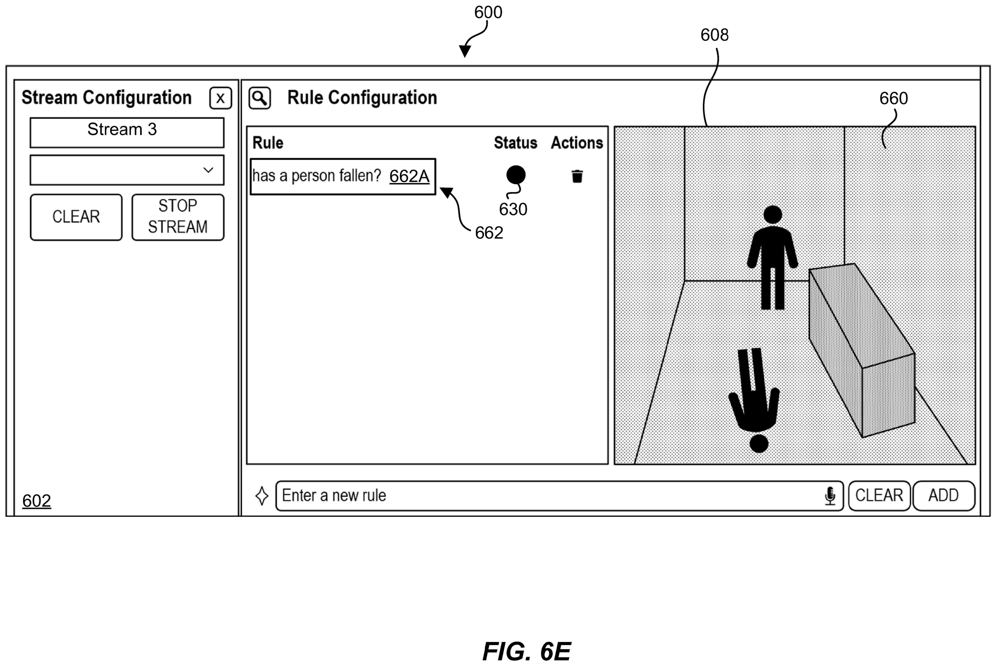

In some aspects, the user interface 600 includes a first section 602 for stream configuration. The first section 602 includes one or more user interface (UI) elements (e.g., a dropdown box 604, an input text field, etc.) for receiving, from the operator, user input indicative of a stream (e.g., captured by at least one of cameras 120-1, 120-2, ..., and 120-*n* in FIG. 1) for the server 110 to perform video analytics on. In some aspects, the server 110 receives a plurality of images of the stream. In some aspects, the first section 602 includes a read-only display field 634 displaying a name or other identification for the stream (e.g., "Stream 1" for the first stream, "Stream 2" for a second stream in FIG. 6D, "Stream 3" for a third stream in FIG. 6E). Additionally or alternatively, the first section 602 includes a selectable UI element 606 (e.g., a START STREAM button in FIG. 6A) the operator interacts with to initiate playback of the stream. Additionally or alternatively, the first section 602 includes at least one of the following selectable UI elements (not shown) for controlling the playback of the stream: a play button, a stop button, a pause button, a rewind button, fast forward button, or an interactive seek bar (or scrub bar).

In some aspects, the user interface 600 includes a second section 608 for displaying a sequence of images of the stream (e.g., images of the first stream) during the playback of the stream.

Additionally or alternatively, the first section 602 includes a selectable UI element 612 the operator interacts with to clear the name or other identification for the stream from the display field 634, which in turn allows the operator to provide additional user input (e.g., via dropdown box 604) indicative of another stream (e.g., the second stream or the third stream) for the server 110 to perform video analytics on.

In some aspects, the user interface 600 includes a third section 614 for receiving an initial NL question 620 (i.e., NL query) from the operator to identify an event. Additionally or alternatively, the operator inputs the question 620 by typing the question 620 into a text input field 616 of the third section 614. Additionally or alternatively, the operator interacts with a selectable UI element 618 of the third section 614 to input the question 620 via speech (e.g., the question 620 is a spoken or verbal query). Additionally or alternatively, the client 200 relays the question 620 to the server 110 (e.g., via interface server 230 in FIG. 2), such that the server 110 receives the question 620 from the client 200 to identify the event.

In some aspects, the user interface 600 includes a chat interface 624. In response to a NL question 620 received from the operator, the chat interface 624 displays the question 620, and further displays one or more NL follow-up questions 622 in response to the question 620. The follow-up questions 622 are generated by the server 110 (e.g., via rule creation engine 240 in FIG. 2) based on the question 620. The server 110 provides the follow-up questions 622 to the client 200 (e.g., via interface server 230 in FIG. 2).

In some aspects, the user interface 600 includes a fourth section 626 for rule configuration. Additionally or alternatively, the operator selects at least one NL follow-up question 622 from the chat interface 624. In some aspects, a follow-up question 622 selected from the chat interface 624 represents a NL answer. Additionally or alternatively, the operator provides a typed (e.g., via text input field 616) or spoken/verbal (e.g., via selectable UI element 618) NL answer. The server 110 receives, in response to the follow-up questions 622, one or more NL answers from the client 200 (e.g., via interface server 230 in FIG. 2).

Additionally or alternatively, the fourth section 626 lists one or more rules 628 based on one or more NL answers provided. For example, in some aspects, each follow-up question 622 selected is listed as a NL rule 628. The server 110 applies each rule 628 (e.g., via video AIpipeline 220 in FIG. 2) to identify a corresponding event defined by the rule 628 in the images of the stream (e.g., images of the first stream). For each rule 628, the fourth section 626 includes a corresponding status indicator 630 indicative of whether a corresponding event defined by the rule 628 has been identified in a subset of the images, and a corresponding selectable UI element 632 for deleting the rule 628. The server 110 identifies the event from the images based on at least one of the one or more NL answers.

In some aspects, a status indicator 630 corresponding to a rule 628 is color-coded, such that the status indicator 630 displays a first color (e.g., green) if a corresponding event defined by the rule 628 has been identified in a subset of the images (e.g., images of the first stream), and a different second color (e.g., red) if the corresponding event has not been identified in the subset.

Additionally or alternatively, one or more alarms/alerts are automatically triggered based on each status indicator 630 (e.g., alerting appropriate personnel, such as fire department). For example, in one aspect, the client 200 triggers/renders an alarm/alert in a graphical user interface for display to an operator (e.g., via client 200). As another example, in one aspect, the server 110 forwards a control directive to a controller at a site that the plurality of images capture to actuate an alarm or warning system at the site.

For example, as shown in FIG. 6A, a first NL question 620A (i.e., an initial NL question) is an example NL question 620 provided by the operator. The question 620A comprises a request for suggestions for analytic rules for the first video scene 610 presented by the images of the first stream. In response to the question 620A, one or more NL follow-up questions 622 are displayed in the chat interface 624, such as one NL follow-up question 622A asking whether a person is wearing a high-visibility vest, and another NL follow-up question 622B asking whether the person is carrying an object (e.g., a handbag or backpack). If the operator selects the follow-up question 622A as a NL answer, the NL follow-up question 622A is listed as a first rule 628A in the fourth section 626. The first rule 628A is an example rule 628 the server 110 applies when performing video analytics on the first stream. For example, for each video scene included in the first stream (e.g., the first video scene 610), a first status indicator 630 corresponding to the rule 628A either flashes green if the person is wearing a high-visibility vest in the video scene, or flashes red if the person is not wearing a high-visibility vest in the video scene.

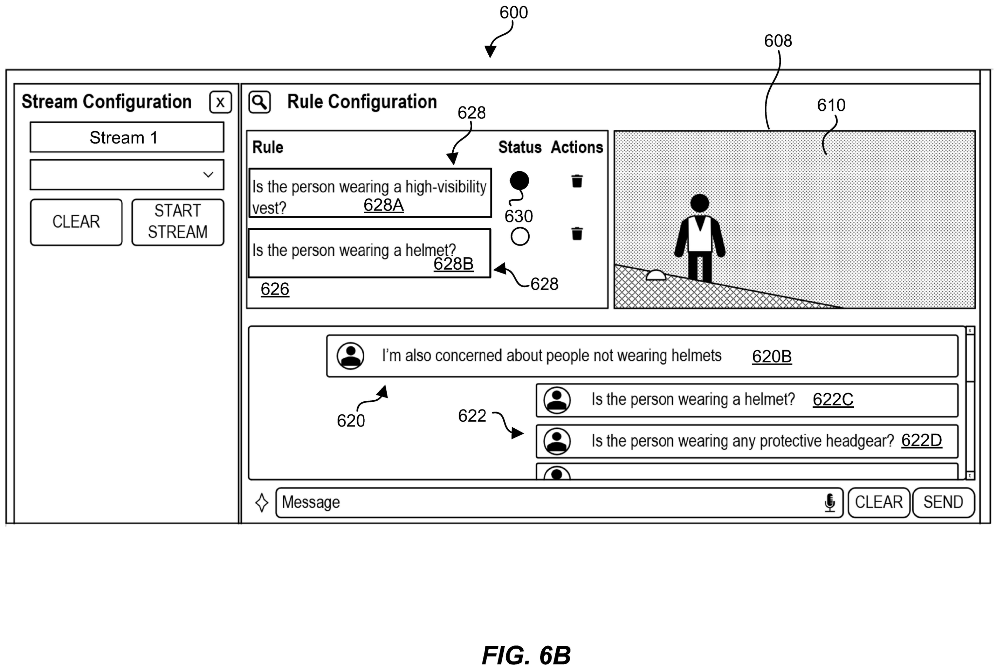

FIG. 6B is the example user interface 600 displaying the first video scene 610 with multiple NL rules 628 applied, according to some aspects of the present disclosure. As shown in FIG. 6B, a second NL question 620B is another example NL question 620 provided by the operator after the first NL question 620A (FIG. 6A). The question 620B expresses the operator's concern about people not wearing helmets. In response to the question 620B, one or more additional NL follow-up questions 622 are displayed in the chat interface 624, such as one NL follow-up question 622C asking whether the person is wearing a helmet, and another NL follow-up question 622D asking whether the person is wearing any protective headgear.

If the operator selects the NL follow-up question 622C as a NL answer, the NL follow-up question 622C is listed as a second rule 628B in the fourth section 626. The second rule 628B is another example rule 628 the server 110 applies when performing video analytics on the first stream. In some aspects, for each video scene (e.g., the first video scene 610), a second status indicator 630 corresponding to the second rule 628B either flashes green if the person is wearing a helmet in the video scene, or flashes red if the person is not wearing a helmet in the video scene.

For example, as shown in FIG. 6B, if the first video scene 610 shows the person wearing a high-visibility vest but not a helmet, the first status indicator 630 corresponding to the first rule 628A flashes green, and the second status indicator 630 corresponding to the second rule 628B flashes red instead.

Additionally or alternatively, as shown in FIGS. 6A-6B, the operator describes any unique scenario using NL queries, and receives NL follow-up questions relevant to the scenario which rules for the scenario are based on. This removes the need for a uniquely trained analytic model for each scenario (e.g., fall detection in FIG. 6E, fire detection in FIG. 6D, object detection in FIGS. 6A-6C, etc.), thereby saving time and costs.

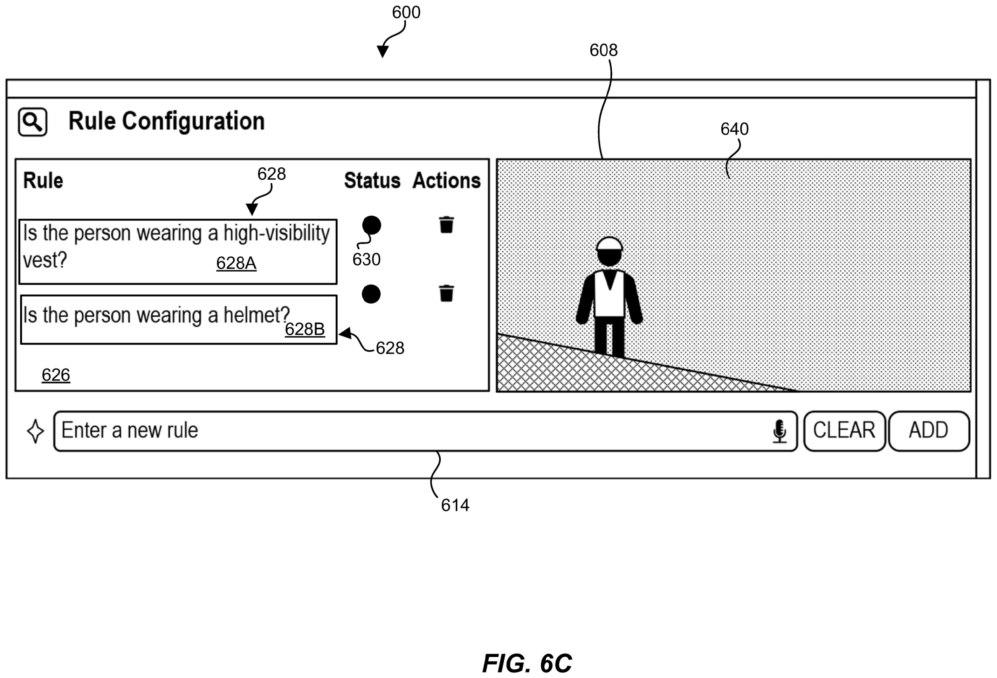

FIG. 6C is the example user interface 600 displaying a second example video scene 640 of the first stream with the multiple NL rules 628 of FIG. 6B applied, according to some aspects of the present disclosure. In some aspects, the first section 602 (FIG. 6A) and/or the chat interface 624 (FIG. 6A) is minimizable or removable from the user interface 600. During the playback of the first stream, a different video scene presented by the images of the first stream, such as the second video scene 640, is displayed in the second section 608.

For example, as shown in FIG. 6C, if the second video scene 640 shows the person wearing both a high-visibility vest and a helmet, both the first status indicator 630 and the second status indicator 630 corresponding to the first rule 628A and the second rule 628B, respectively, flashes green.

Additionally or alternatively, the operator enters another rule 628 via one or more UI elements of the third section 614.

FIG. 6D is the example user interface 600 displaying a third example video scene 650 of a second stream with multiple example NL rules 652 applied, according to some aspects of the present disclosure. Additionally or alternatively, as described above, the operator interacts with the first section 602 to change which stream to playback. For example, if the second stream is requested for playback, video scenes presented by images of the second stream, such as the third video scene 650, are displayed in the second section 608 during the playback of the second stream.

As shown in FIG. 6D, one or more different NL rules 652 are applied to the second stream, such as a first NL rule 652A asking if something is on fire, and a second NL rule 652B asking if something is smoking. If the third video scene 650 shows smoke, a first status indicator 630 corresponding to a first rule 652A flashes red, and a second status indicator 630 corresponding to the second rule 652B flashes green instead. In some aspects, each NL rule 652 is an NL answer that the operator selects from one or more NL follow-up questions displayed in the chat interface 624 (FIG. 6A), types (e.g., via text input field 616 in FIG. 6A), or speaks/verbally provides (e.g., via selectable UI element 618).

FIG. 6E is the example user interface 600 displaying a fourth example video scene 660 of a third stream with another example NL rule 662 applied, according to some aspects of the present disclosure. If the third stream is requested for playback, video scenes presented by images of the third stream, such as the fourth video scene 660, are displayed in the second section 608 during the playback of the third stream.

As shown in FIG. 6E, one or more different NL rules 662 are applied to the third stream, such as a first NL rule 662A asking if a person has fallen. If the fourth video scene 660 shows someone who has fallen onto the ground, a first status indicator 630 corresponding to a first rule 662A flashes green. In some aspects, each NL rule 662 is an NL answer that the operator selects from one or more NL follow-up questions displayed in the chat interface 624 (FIG. 6A), types (e.g., via text input field 616 in FIG. 6A), or speaks/verbally provides (e.g., via selectable UI element 618).

Therefore, in general, the present disclosure provides systems and methods for video surveillance by leveraging natural language processing in conjunction with image-based data acquisition. The present disclosure enables a user to submit a natural language question regarding an event to identify, wherein the system automatically receives and analyzes a plurality of images from distributed cameras, processes the visual data to extract relevant information, and generates a responsive output tailored to the user's question. This approach offers significant technical advantages over prior solutions, including the ability to dynamically interpret and respond to complex, context-specific questions without requiring pre-defined query structures, as well as improved accuracy and efficiency in video surveillance through real-time, automated analysis of visual data. The integration of natural language understanding with image analytics provides a more intuitive and flexible interface for users, reduces manual intervention, and enhances the overall responsiveness and scalability of video surveillance operations.

The present disclosure can be described in accordance with the following numbered Clauses, which should not be confused with the claims. Any of these Clauses can be claimed in a separate claim, e.g. by substituting the word "Clause" by "Claim", in particular in the order as mentioned below and/or in any combination with any embodiment described above or with any of the features of the attached claims.

Clause 1. A system for identifying an event, comprising: one or more memories storing instructions therein; one or more processors communicatively coupled with the one or more memories and configured, individually or in any combination, to execute the instructions to: receive a plurality of images; receive a natural language question from a client to identify the event; generate one or more natural language follow-up questions based on the natural language question; provide the one or more natural language follow-up questions to the client; receive, in response to the one or more natural language follow-up questions, one or more natural language answers; and identify the event from the plurality of images based on at least one of the one or more natural language answers.

Clause 2. The system of clause 1, wherein to identify the event from the plurality of images the one or more processors are further configured to identify the event from the plurality of images using a neural network.

Clause 3. The system of any one of the preceding clauses, wherein to generate the one or more natural language follow-up questions the one or more processors are further configured to iteratively generate the one or more natural language follow-up questions based on a large-language model.

Clause 4. The system of any one of the preceding clauses, wherein the one or more processors are further configured to retrieve one or more context-based questions based on a context of the plurality of images.

Clause 5. The system of any one of the preceding clauses, wherein to generate the one or more natural language follow-up questions the one or more processors are further configured to iteratively generate the one or more natural language follow-up questions based on the context of the plurality of images.

Clause 6. The system of any one of the preceding clauses, wherein the one or more processors are further configured to display a subset of the plurality of images that are associated with the identified event onto the client.

Clause 7. A non-transitory computer readable medium having instructions stored therein for identifying an event, the instructions, when executed by one or more processors, individually or in any combination, cause the one or more processors to: receive a plurality of images; receive a natural language question from a client to identify the event; generate one or more natural language follow-up questions based on the natural language question; provide the one or more natural language follow-up questions to the client; receive, in response to the one or more natural language follow-up questions, one or more natural language answers; and identify the event from the plurality of images based on at least one of the one or more natural language answers.

Clause 8. The non-transitory computer readable medium of clause 7, wherein the instructions further cause the one or more processors to identify the plurality of images using a neural network.

Clause 9. The non-transitory computer readable medium of any one of the preceding clauses, wherein the instructions further cause the one or more processors to iteratively generate the plurality of natural language follow-up questions based on a large-language model.

Clause 10. The non-transitory computer readable medium of any one of the preceding clauses, wherein the instructions further cause the one or more processors to retrieve one or more context-based questions based on a context of the plurality of images.

Clause 11. The non-transitory computer readable medium of any one of the preceding clauses, wherein the instructions further cause the one or more processors to iteratively generate the plurality of natural language follow-up questions based on the context of the plurality of images.

Clause 12. The non-transitory computer readable medium of any one of the preceding clauses, wherein the instructions further cause the one or more processors to display a subset of images associated with the identified event onto the client.

Clause 13. A method for identifying an event, comprising: receiving a plurality of images; receiving a natural language question from a client to identify the event; generating one or more natural language follow-up questions based on the natural language question; providing the one or more natural language follow-up questions to the client; receiving, in response to the one or more natural language follow-up questions, one or more natural language answers; and identifying the event from the plurality of images based on at least one of the one or more natural language answers.

Clause 14. The method of clause 13, further comprising identifying the plurality of images using a neural network.

Clause 15. The method of any one of the preceding clauses, wherein generating the one or more natural language follow-up questions comprises iteratively generating the one or more natural language follow-up questions based on a large-language model.

Clause 16. The method of any one of the preceding clauses, further comprising retrieving one or more context-based questions based on a context of the plurality of images.

Clause 17. The method of any one of the preceding clauses, wherein generating the one or more natural language follow-up questions comprises iteratively generating the one or more natural language follow-up questions based on the context of the plurality of images.

Clause 18. The method of any one of the preceding clauses, further comprising displaying a subset of images associated with the identified event onto the client.

Clause 19. The method of any one of the preceding clauses, further comprising triggering, in response to the identified event, an alarm in a graphical user interface for display to an operator.

Clause 20. The method of any one of the preceding clauses, further comprising forwarding, in response to the identified event, a control directive to a controller at a site that the plurality of images capture to actuate an alarm or warning system.

It will be appreciated that various implementations of the above-disclosed and other features and functions, or alternatives or varieties thereof, may be desirably combined into many other different systems or applications. Also, that various presently unforeseen or unanticipated alternatives, modifications, variations, or improvements therein may be subsequently made by those skilled in the art which are also intended to be encompassed by the following claims.

## Claims

1. A system for identifying an event, comprising:
one or more memories storing instructions therein;
one or more processors communicatively coupled with the one or more memories and configured, individually or in any combination, to execute the instructions to:
receive a plurality of images;
receive a natural language question from a client to identify the event;
generate one or more natural language follow-up questions based on the natural language question;
provide the one or more natural language follow-up questions to the client;
receive, in response to the one or more natural language follow-up questions, one or more natural language answers; and
identify the event from the plurality of images based on at least one of the one or more natural language answers.

2. The system of claim 1, wherein to identify the event from the plurality of images the one or more processors are further configured to identify the event from the plurality of images using a neural network.

3. The system of claim 1 or 2, wherein to generate the one or more natural language follow-up questions the one or more processors are further configured to iteratively generate the one or more natural language follow-up questions based on a large-language model.

4. The system of any of claims 1 to 3, wherein the one or more processors are further configured to retrieve one or more context-based questions based on a context of the plurality of images;
optionally, wherein to generate the one or more natural language follow-up questions the one or more processors are further configured to iteratively generate the one or more natural language follow-up questions based on the context of the plurality of images.

5. The system of any of claims 1 to 4, wherein the one or more processors are further configured to display a subset of the plurality of images that are associated with the identified event onto the client.

6. A non-transitory computer readable medium having instructions stored therein for identifying an event, the instructions, when executed by one or more processors, individually or in any combination, cause the one or more processors to:
receive a plurality of images;
receive a natural language question from a client to identify the event;
generate one or more natural language follow-up questions based on the natural language question;
provide the one or more natural language follow-up questions to the client;
receive, in response to the one or more natural language follow-up questions, one or more natural language answers; and
identify the event from the plurality of images based on at least one of the one or more natural language answers.

7. The non-transitory computer readable medium of claim 6, wherein the instructions further cause the one or more processors to identify the plurality of images using a neural network.

8. The non-transitory computer readable medium of claim 6 or 7, wherein the instructions further cause the one or more processors to iteratively generate the plurality of natural language follow-up questions based on a large-language model.

9. The non-transitory computer readable medium of any of claims 6 to 8, wherein the instructions further cause the one or more processors to retrieve one or more context-based questions based on a context of the plurality of images;
optionally, wherein the instructions further cause the one or more processors to iteratively generate the plurality of natural language follow-up questions based on the context of the plurality of images.

10. The non-transitory computer readable medium of any of claims 6 to 9, wherein the instructions further cause the one or more processors to display a subset of images associated with the identified event onto the client.

11. A method for identifying an event, comprising:
receiving a plurality of images;
receiving a natural language question from a client to identify the event;
generating one or more natural language follow-up questions based on the natural language question;
providing the one or more natural language follow-up questions to the client;
receiving, in response to the one or more natural language follow-up questions, one or more natural language answers; and
identifying the event from the plurality of images based on at least one of the one or more natural language answers.

12. The method of claim 11, further comprising identifying the plurality of images using a neural network.

13. The method of claim 11 or 12, wherein generating the one or more natural language follow-up questions comprises iteratively generating the one or more natural language follow-up questions based on a large-language model.

14. The method of any of claims 11 to 13, further comprising retrieving one or more context-based questions based on a context of the plurality of images;
optionally, wherein generating the one or more natural language follow-up questions comprises iteratively generating the one or more natural language follow-up questions based on the context of the plurality of images.

15. The method of any of claims 13 to 14, further comprising displaying a subset of images associated with the identified event onto the client; and/or
further comprising triggering, in response to the identified event, an alarm in a graphical user interface for display to an operator; and/or
further comprising forwarding, in response to the identified event, a control directive to a controller at a site that the plurality of images capture to actuate an alarm or warning system.
